Europäisches Patentamt

European Patent Office

Office européen des brevets

(11) Publication number: **0 010 634**
A1

## (12) EUROPEAN PATENT APPLICATION

(21) Application number: 79103774.0

(22) Date of filing: 03.10.79

(51) Int. Cl.³: **G 06 K 15/10,** B 41 J 3/20

(30) Priority: 10.10.78 US 949702

(43) Date of publication of application: 14.05.80
Bulletin 80/10

(84) Designated Contracting States: DE FR GB IT

(71) Applicant: International Business Machines
Corporation, Armonk, N.Y. 10504 (US)

(72) Inventor: Harding, Robert Frank, 3556 6th Street NW.,
Rochester, MN 55901 (US)
Inventor: Heiling, Gerald Michael, Route 1, Pine Island,
MN 55963 (US)
Inventor: Holter, Spencer Clinton, 4065 5th Street NW,
Rochester, MN 55901 (US)
Inventor: Sonderstrom, Ronald Lee, 3832 16th Avenue
NW, Rochester, MN 55901 (US)

(74) Representative: Lancaster, James Donald,
Rablstrasse 24, D-8000 München 80 (DE)

(54) Method and apparatus for on-the-fly thermographic printing.

(57) Thermal marking element (11), which is one of a column of such elements in a print module, has a rectangular face for contacting a thermographic medium, which moves parallel to the short sides of the rectangular face. The element (11) is heated by a square wave voltage pulse having leading and trailing edges (20, 21) spaced in time about 60% of the time taken by the element (11) to relatively move from the beginning of one square mark location to the beginning of the adjacent location, the pulse amplitude raising the temperature of the element only moderately e.g. 25°C above that required for marking the medium. A square mark is produced without a smeared tail at the trailing edge.

- 1 -

## METHOD AND APPARATUS FOR
## ON-THE-FLY THERMOGRAPHIC PRINTING

This invention relates to method and apparatus for thermographic printing.

U.S. Patent 3.777.116 discloses an on-the-fly thermographic printer having a thermal marking element comprising a heating element with a rectangular face in contact with a thin heat-conducting metal band. Actually a column of such heating elements contacts the band. In operation a thermographic tape passes over the outside surface of the metal band. The heating elements have electrical means selectively energisable to raise the temperature of the rectangular faces to cause selective marking of the thermographic tape via the metal band, and there is a tape feeding device for feeding the thermographic tape parallel to the short sides of the rectangular faces. Energisation of one of the electrical means by a pulse can in particular cause the corresponding heated rectangular face to produce a "square" marking or "dot" on the thermographic tape. A character to be printed is built up by a sequence of selective energisations of the column of heating elements, the frequency of the sequence being related to the feed rate of the thermographic tape and the dimensions of the square markings.

In such printers, the practice in the art has been to use very short energising pulses of standard duration, and to modulate the pulse amplitude as desired. For example such amplitude modulation is described in the above U.S. Patent to prevent overheating which would arise if the same thermal marking element was successively operated during each period of the sequence of selective energisations. Such overheating would cause uneven printing. Other reasons for modulation are to allow the printer to be adjusted for different thermographic media having different marking temperatures, and to adjust for different ambient temperatures. The modulation needs to be adjusted until the best print definition is achieved and the marking produced by a single energising pulse has corners that best lie on a "square".

Actually in such printers, the energising pulses of standard duration have raised the temperature of the thermal marking elements substantially (e.g. 300°C) above the temperature needed to attain full "development" of the thermographic media. The marking process is therefore a two-part process, the first part being marking which takes place while the energising pulse is on, and the second part being marking which takes place when the enegising pulse ceases and during the relatively long cooling period when a heated thermal marking element cools to below the temperature at which marking ceases.

We have analysed print quality of such printers and have noted that the marking at the trailing edge has a smeared tail i.e. the trailing edge is pointed in that it gradually converges to an apex. This is caused by uneven cooling of the thermal marking element. Cooling results from contact with the thermographic medium, and the edges of the thermal marking element cool fastest, and also some irregularities occur due to surface irregularities of the thermographic medium. With a thermal marking element having a rectangular face, the irregularities in cooling rate can be greater than if the face is square, bearing in mind that the surface area of the rectangular face from which heat is conducted for cooling is less than the surface area of a square face, and bearing in mind that the mass and therefore the heat capacity of a thermal marking element with a rectangular face would ordinarily be less than that of a thermal marking element with a square face. Also irregularities in cooling rate become greater if one attempts to increase print speed by increasing the feed rate of the thermographic medium, and by using the standard duration energising pulse but with an

RO 9 77 016

- 3 -

increased amplitude. In this case the thermal marking element would be heated to a higher temperature by the energising pulse, and so the cooling time would be greater and there would be more chance of irregularities arising. In fact the markings in this case would be larger than square, and to produce square markings again, the duration of the energising pulse would have to be reduced. In the past the common view was: the higher the print speed, the shorter the energising pulse duration, until the print speed is limited by the time, required for the temperature of the thermal marking element to fall below the marking temperature, approaching the time taken by the thermal marking element to relatively move between two adjacent square-marking locations on the thermographic medium.

The contribution to the art made by the present invention is the technique involving raising the temperature of the marking element only moderately above the threshold required to produce a mark on the thermographic medium, which gives better print definition and enables higher print speeds.

A method and apparatus according to the invention for on-the-fly thermographic printing are characterised in appended claims 1 and 2.

Fig. 1 shows two plots of temperature against time;

Fig. 2 illustrates different print images;

Fig. 3 schematically shows a representation of a print module;

Fig. 4 illustrates the thermographic printing of a square marking;

Fig. 5 is a representation of an actuating circuit for a print module;

RO 9 77 016

- 4 -

Fig. 6 is a plan view of a thermal marking element; and

Fig. 7 is a section view taken along line 7-7 of Fig. 6.

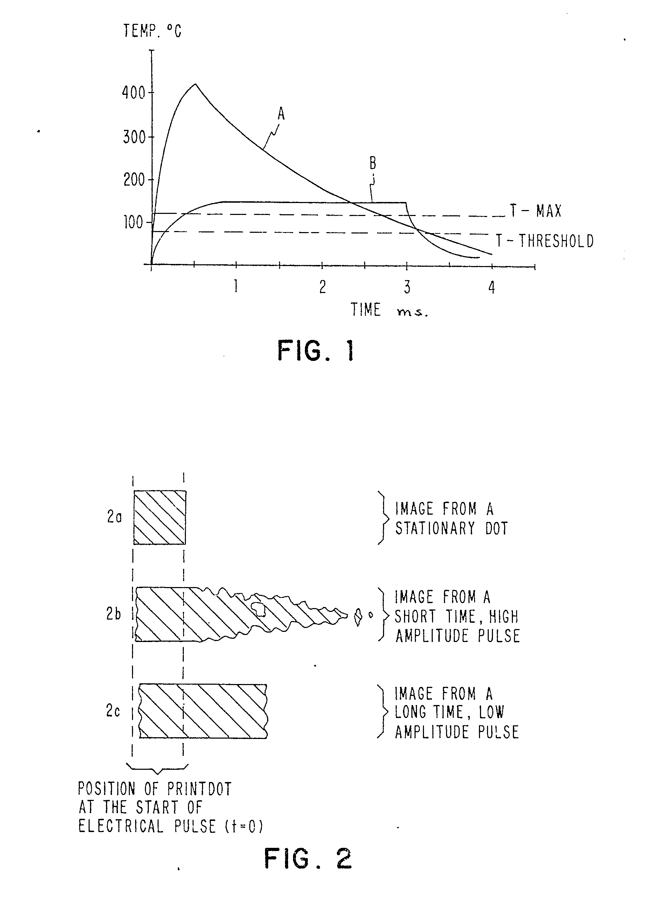

Fig. 1 relates to two thermal marking elements, each having electrical means to energise it to raise its temperature for marking.

Plot A shows the results of a high amplitude electrical pulse applied for a 0.5 millisecond duration, and plot B illustrates the results of a lower amplitude electrical pulse, which produces a steady temperature only moderately in excess (e.g. $25^{\circ}$C) of a temperature devoted T-MAX but sufficiently high to assure printing and which is applied for 3 milliseconds. The temperatures denoted respectively by T-THRESHOLD and T-MAX relate to a thermographic medium, and are the temperature at which "development" just begins to form a visually perceptable image, and the temperature at which full "development" i.e. maximum conversion of the heat sensitive substrance on the thermographic medium to visible form occurs. It will be seen that plot A has a long fall time from the peak temperature to T-THRESHOLD, whereas plot B has a very short fall time.

Fig. 2 illustrates different print images. Print image 2a is obtained by heating a square thermal marking element which is stationary relative to the thermographic medium on which image 2a is formed. With the thermal marking element stationary with respect to the thermographic medium, it is possible to precisely position the image and obtain excellent definition along all sides of the image. The price for the excellence of resolution is a limited speed as the thermographic medium or thermal marking element must be incremented between each print cycle and must remain stationary during the print operation. To achieve increased speed, it is necessary to print on-the-fly and to minimize undesired effects arising because of relative motion between the thermal marking element and media during print cycles. Print image 2b is obtained when the square ther-

RO 9 77 016

mal marking element is energised using a short time, high amplitude pulse in an on-the-fly printing application. The leading edge of the print image has a slightly irregular resolution as the temperature (plot A, Fig.1) of the thermal marking element swiftly traverses the transition temperature range (T-THRESHOLD to T-MAX), and rises to the peak temperature; however, as the temperature slowly declines from the peak temperature, a long irregular pointed smeared tail is imparted at the trailing edge of the print image. This is caused by uneven cooling of the thermal marking element. Print image 2c is obtained when the square thermal marking element is energised using a longer but lower amplitude pulse, for which plot B, Fig.1 applies, in on-the-fly printing. Print image 2c shows a definition with slight irregularities on both the leading and trailing edges, but an acceptable resolution is achieved particularly at the trailing edge because marking ceases without producing a smeared tail as in print image 2b at the trailing edge of the mark in the direction of relative movement, effectively immediately after energisation of the thermal marking element by the electrical means has ceased. It will also be noted with respect to both print images 2b and 2c that as a result of the relative motion between the thermal marking element and the media, the leading edges are displaced from the dotted line indicative of the position of the thermal marking element at the time of initiation of the print cycle and both images are elongated. Print image 2c is produced by a method according to the invention.

Basically, the longer but lower amplitude pulse gives a more controlled situation wherein the electrical power heats the thermal marking element substantially all the time the print image formed. In contrast, the short time, high amplitude pulse gives an uncontrolled situation during the long temperature fall time while the thermal marking element remains above T-THRESHOLD. As soon as the energising pulse terminates the thermal marking element begins cooling, which occurs in a

RO 9 77 016

- 6 -

nonuniform and inconsistent manner. The thermal marking element usually cools fastest at the edges and remains hottest at the center causing the production of randomly dark dots, light voids and varyingly shaped smeared tails such as shown in the print image 2b.

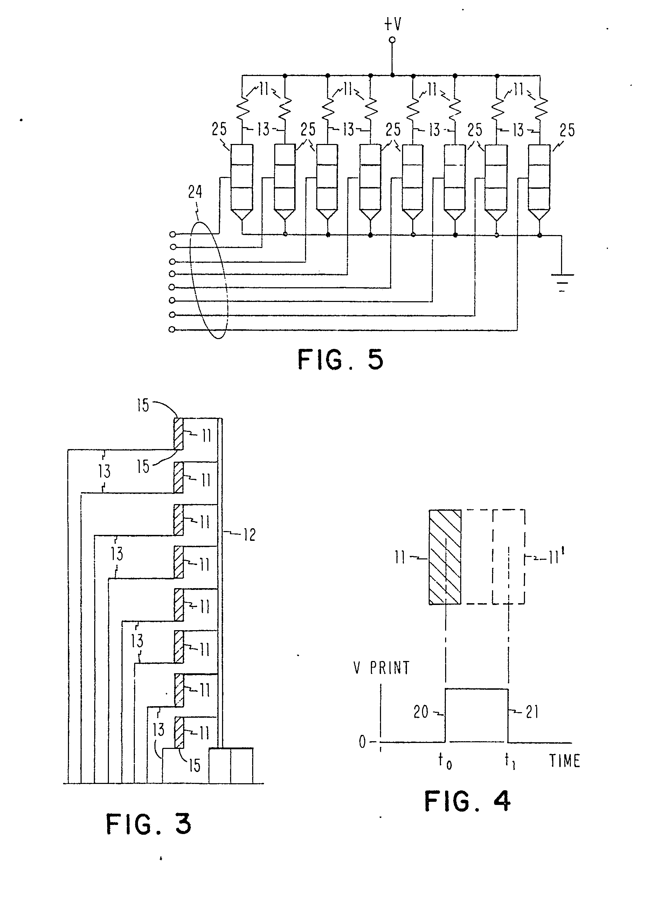

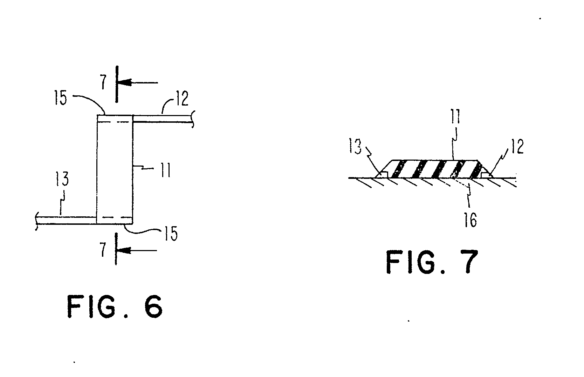

Referring to Fig. 3, a print module comprising a column of thermal marking element 11 is shown, each having a rectangular face, with dimensions in an approximately 3 to 1 ratio rather than the 1 to 1 ratio of the square thermal marking element. In operation the print module is stationary, and the thermographic medium is fed past it in a direction parallel to the short sides of the rectangular faces, by any suitable conventional feed means (not shown). Each thermal marking element is interconnected between a common lead 12 and an individual lead 13. As schematically shown in Figs. 6 and 7, each element 11 is formed of an electrically resistive silicon mesa on a ceramic substrate 16, with leads 12 and 13 connected along the opposite short margins 15. The conductors 12 and 13 consist of gold and are carried by the substrate 16, and may be formed using standard thin film or thick film metalization techniques.

The electrical restistance of the mesa of Fig. 6 is given by the formula:

$$R = \frac{pL}{Wt}$$

where  $p$  =  material resistivity
$L$  =  length
$W$  =  width
$t$  =  mesa thickness

Since the current passes through the length of the mesa between margins 15, the resistance is three times greater than a square face mesa whose side equals the length of the rectangular face. Also the rectangular face mesa has a smaller heat capacity, be-

RO 9 77 016

cause of its maller mass, which reduces the thermal rise and fall times. Fig. 4 shows a square wave voltage pulse, which is used to generate a square print image. The pulse duration corresponds to about 60% of the time the thermographic medium takes to move a distance equivalent to three times the mesa width, i.e. the distance between adjacent square image locations on the medium. At the leading edge 20 of the pulse, the mesa 11 is in the solid line position, and at the trailing edge 21 of the pulse the mesa 11 has reached the position shown at 11' to define the square image. If the ratio of the sides of the rectangular face is nearer 2 to 1 rather than 3 to 1, instead of the above figure of about 60%, the figure should be about 40%. Preferably the dimension of the thermal marking element in the direction of relative movement does not exceed one-half the length of the smallest mark desired to be recorded. In the case of a rectangular face preferably the ratio of the sides is not less than 2 to 1.

Fig. 5 shows an actuating circuit for the print module of Fig.3, in which the mesas are represented as resistors. When a voltage pulse whose duration is determined by any suitable conventional technique is selectively applied to one (or more) of the lines 24, the corresponding transistor 25 is made conductive to cause current to flow through and heat the associated mesa 11. The arrangement is designed to operate to raise the temperature of the mesa (as in plot B of Fig. 1) only moderately above that required for producing a mark on thermographic media having specific thermal sensitivity characteristics. The design may include manually adjustable means for varying the temperature attained by the mesa to allow the circuity to be set for example for thermographic media having differing thermal sensitivity characteristics. Apparatus according to Figs. 3 to 7 is in accordance with the invention.

The use of low amplitude pulses to heat the thermal marking elements as in plot B Fig. 1 not only improves print image resolution but also affords longer life of the print module.

RO 9 77 016

- 8 -

Using the above techniques, it has been possible to achieve a doubling of the on-the-fly print speed. With a square face thermal marking element and high amplitude pulses, in one apparatus the printing of dot matrix characters was limited to a speed of approximately 1.5 to 2.0 inches per second. With the rectangular face thermal marking and low amplitude pulses to cause heating as in plot B of Fig. 1, satisfactory printing was obtained at speeds of 3 to 4 inches per second.

It will be appreciated that the invention can be applied to a thermographic printer having a thermal print module mounted on a carriage which traverses a thermographic medium, the latter being incremented after each line has been printed.

RO 9 77 016

0010634

- 9 -

C·L A I M S

1. Method of on-the-fly thermographic printing in which a thermal marking element moves relatively to and in contact with a thermographic medium, the thermal marking element having electrical means to energise it to raise its temperature for marking, and having a width in the direction of relative movement less than the smallest mark to be made, characterised in that said electrical means operates to raise the temperature of the marking element only moderately above that required for producing a mark on said thermographic medium, and marking ceases without producing a smeared tail at the trailing edge of the mark in the direction of relative movement effectively immediately after energisation of the thermal marking element by the electrical means has ceased.

2. Apparatus for on-the-fly thermographic printing including a thermographic medium, a thermal marking element, means for effecting relative movement between the thermal marking element and the thermographic medium while they are in contact, electrical means to energise the thermal marking element to raise its temperature for marking, the thermal marking element having a width in the direction of relative movement less than the smallest mark to be made, characterised in that said electrical means is designed to operate to raise the temperature of the marking element only moderately above that required for producing a mark on said thermographic medium, cessation of energisation of the thermal marking element by the electrical means being effectively immediately followed by cessation of marking without producing a smeared tail at the trailing edge of the mark in the direction of relative movement.

RO 9 77 016

3. Apparatus as claimed in claim 2 in which the thermal marking element has a rectangular face for contacting the thermographic medium.

4. Apparatus as claimed in claim 2 or 3 in which said thermal marking element is a silicon resistor mesa, formed on a ceramic substrate, and connected along opposite margins thereof to metallic conductors formed on said substrate.

5. Apparatus as claimed in claim 4 when dependent on claim 3 in which said opposite margins are the short sides of said rectangular face.

6. Apparatus as claimed in claim 4 or 5 in which said electrical means operates to apply a square wave voltage pulse across said conductors.

7. Apparatus as claimed in any of claims 2 to 6 in which said electrical means operates to raise the temperature of the marking element up to 25$^{o}$C above that required for producing a mark on the thermographic medium.

RO 9 77 016

0010634

1 / 3

TEMP. °C

FIG. 1

2a — IMAGE FROM A STATIONARY DOT

2b — IMAGE FROM A SHORT TIME, HIGH AMPLITUDE PULSE

2c — IMAGE FROM A LONG TIME, LOW AMPLITUDE PULSE

POSITION OF PRINTDOT AT THE START OF ELECTRICAL PULSE (t=0)

FIG. 2

+V

FIG. 5

FIG. 3

V PRINT

FIG. 4

FIG. 6

FIG. 7

**European Patent Office**

## EUROPEAN SEARCH REPORT

Application number

EP 79 103 774.0

| | DOCUMENTS CONSIDERED TO BE RELEVANT | | CLASSIFICATION OF THE APPLICATION (Int. Cl.) |
|---|---|---|---|
| Category | Citation of document with indication, where appropriate, of relevant passages | Relevant to claim | |
| | HEWLETT-PACKARD JOURNAL, Volume 29, No. 8, April 1978 R.J. COSSENS "Advanced Thermal Page Printer Has High-Resolution Graphics Capability" pages 22 to 24 * fig. 6 * | 1,2, 6 | G 06 K  15/10 B 41 J   3/20 |
| | -- | | |
| | GB - A - 1 422 039 (K.K. SUWA SEIKOSHA) * fig. 5, 6 * | 1,2, 6 | **TECHNICAL FIELDS SEARCHED (Int.Cl.)** B 41 J   3/20 G 06 K   15/10 |
| | -- | | |
| A | DE - A1 - 2 559 563 (HEWLETT-PACKARD) * complete document * | | |
| | -- | | |
| A | DE - A1 - 2 531 092 (FACIT AB) * complete document * | | |
| | -- | | **CATEGORY OF CITED DOCUMENTS** |
| D | US - A - 3 777 116 (BRESCIA et al.) * complete document * | | X: particularly relevant A: technological background O: non-written disclosure P: intermediate document T: theory or principle underlying the invention E: conflicting application D: document cited in the application L: citation for other reasons |
| | ---- | | |
| | | | &: member of the same patent family, corresponding document |

| | The present search report has been drawn up for all claims | | |
|---|---|---|---|
| Place of search Berlin | Date of completion of the search 01-02-1980 | Examiner | ZOPF |

EPO Form 1503.1   06.78